# EUROPEAN PATENT APPLICATION

(11) **EP 2 772 137 A1**
(43) Date of publication of application: **03.09.2014**
(21) Application number: 14156150.6
(22) Date of filing: 21.02.2014
(51) Int. Cl.: A01N 55/08, A01N 37/46

(54) **Composition for protecting plants against frost and method of plant protection**

(30) Priority: 27.02.2013 CZ 20130146
(71) Applicant: Agra Group, A.S., 387 15 Strelske Hostice (CZ)
(72) Inventor:
(74) Representative: Hartvichova, Katerina

(57) **Abstract**

The invention provides a composition for plant protection against frost containing at least one acylamidopropyldimethylbetaine and at least one aminoborate. The invention also describes a method of application of the compositions.

## Description

### Field of Art

The invention relates to compositions and methods of plant protection against negative effects of frost, hence it concerns increasing their resistance to damage at temperatures below 0 °C.

### Background Art

Upon frost exposure, plants can be damaged by formation of ice crystals within the intercellular space. The damage takes place mainly in the spring period of the so-called late spring frosts or in autumn during the so-called early autumn frosts. The late spring frosts are economically most important because plants are in a period of intensive growth and therefore very sensitive. Even if the plants recover from the frost, they tend to be weak and predisposed to fungal infections, and their dead parts can secondarily be attacked by saprophytic microorganisms.

Crystal formation is driven thermodynamically and kinetically, and it can be influenced by each of those factors. Melting points of aqueous solutions can be decreased thermodynamically by changing their colligative properties (theoretically by addition of any non-volatile compound), whereas kinetics has an impact on crystal formation rate. As it is known, water or aqueous solutions are able to reach a supercooled state, in which their liquid state remains at temperatures below the melting point. The ice formation from a supercooled solution occurs either by a spontaneous crystallization or upon the presence of ice nucleation catalysts. If the ice formation does not occur, certain plants are able to withstand temperatures up to -9 °C (depending on the plant species) without any damage. Most common natural sources of ice nucleation catalysts are bacteria capable to induce the ice crystal nuclei formation (INB, ice-nucleating bacteria) (Gurian-Sherman D. and Lindow S. E., FASEB J., 1993, 7(14), 1338-1343; Christner B. C. et al., Science, 2008, 319, 1214). These bacteria (e.g. *Erwinia herbicola* or *Pseudomonas syringae*) are present on the plant surface and their presence increases the ice crystallization temperature by several °C. Such temperature shift plays a key role in plant immunity. Increase in plant resistance towards frost can be achieved by deactivation of those bacteria (Holt C. B., CryoLetters, 2003, 24, 269-274).

Generally, plants are treated with substances possessing broad-spectrum bactericidal activity, such as antibiotics, oxidation agents (NaClO, NaClO₂, urea peroxide), copper-based compound etc. Sodium chlorite (NaClO₂) showed INB deactivation activity (US 4834899), however, problems were encountered concerning oxidative stress in plants after spraying. Similar effects are observed for urea peroxide (US 5079868), which is unstable and needs to be stabilized using additional chemicals. Another possibility of INB deactivation is the application of other types of bacteria on the plant surface, which are able to force out INB population (US 4045910, US 4161084, US 4432160) or alternatively the application of virulent bacteriophages capable of selective INB attack (US 4375734). However, the ecological consequences of such step are difficult to predict.

EP 0037593 relates to INB deactivation using quaternary ammonium surfactants applied onto the above-ground parts of plants. This patent describes the inhibition activity of ammonium surfactants on two INB strains under laboratory conditions, however, it demonstrates neither practical activity on plants, neither suitable surfactant dosages, nor phytotoxicity limits.

Other possibility to slow down the ice crystal formation in plants is the application of substances, which decrease the melting point of the solution and in the meantime decrease the temperature of ice nucleation. There exists a whole range of substances showing the decrease of nucleation temperature lower than the proper thermodynamic effect of the decrease of solution melting point (therefore the influence on colligative properties of the solution), for example saccharose, sodium chloride, glycerol, glucose, urea, ethylene glycol, polyethylene glycol or polyvinylpyrrolidone (Holt C. B., CryoLetters, 2003, 24, 269-274). In these aspects, the problem is solved in US 4618442, which uses block copolymers of polyoxyethylene and polyoxypropylene as cryoprotectants, and in US 5124061, using choline salts with monocarboxylic and polycarboxylic acids. These types of substances need to be applied in high dosages and the resulting protection effect is not practically reliable and reproducible because the nucleation temperature also depends significantly on the presence and concentration of INB.

INB deactivation itself, as well as the application of substances decreasing the melting point of solutions and/or ice nucleation temperature, provide only a limited protection of plants. There remains a strong need to develop new cryoprotective substances for plant protection together with methods for their application. The above mentioned substances should not be phytotoxic, should be highly effective, biodegradable and ecologically acceptable.

### Disclosure of the Invention

The present invention overcomes the problems of the prior art by providing the composition, preparation and method of application of substances for plant protection against negative impacts of frost. They contain alkylamidopropyldimethylbetaines and aminoborates, formed by reaction of boric acid with alkanolamines.

The object of the present invention is a composition containing at least one substance of the general formula (I), 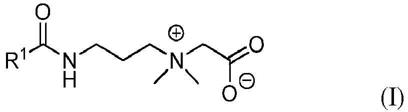 wherein R¹ is C₈-C₂₀ alkyl or C₈-C₂₀ alkenyl, and
at least one aminoborate.

An aminoborate is a product of reaction of boric acid with alkanolamine, where alkanolamine is characterized by the general formula (II)

HO-R²-NR³R⁴ (II)

wherein R² is a saturated C₂-C₄ hydrocarbon chain, optionally substituted with hydroxy or amino group at any carbon atom with the exception of geminal substitution (thus the hydroxy group and the amino group must not be attached to the same carbon atom), and R³ and R⁴ are independently hydrogen or -R²-OH.

The OH group can be attached to any carbon atom of the R² substituent.

R¹ in substances of the general formula (I) (acylamidopropyldimethylbetaine) can be derived from natural lipophilic carboxylic acids present in precursors such as coconut oil, hydrogenated coconut oil, tallow, hydrogenated tallow, palm oil etc., therefore a substance of the general formula (I) can be composed of a mixture of compounds, in which the alkyl and alkenyl R¹ composition corresponds to the composition of natural carboxylic acids of the given precursor. Such carboxylic acids are for example caprylic acid, capric acid, lauric acid, myristic acid, palmitic acid, stearic acid, palmitoleic acid or oleic acid.

The substance of the general formula (I) is preferably selected from the group containing cocoamidopropyldimetylbetaine, oleylamidopropyldimethylbetaine, laurylamidopropyldimetylbetaine.

Aminoborates resulting from the reaction of boric acid with alkanolamine, where alkanolamine is characterized by the general formula (II), are known as boron containing fertilizers. They can be prepared by heating a mixture of boric acid, the corresponding alkanolamine and water, as described in US 4332609. The resulting aminoborate aqueous solution contains a whole range of species (protonated and non-protonated alkanolamines, various polyborate anions, boric acid esters with alkanolamine hydroxy groups) and their equilibrium composition depends on pH, component concentration and water content in the system. In spite of the fact that certain components of the solution can be isolated as crystals (Schubert D. M., Inorg. Chem., 2008, 47, 2017-2023), the present invention always uses aqueous solutions of aminoborates, whose composition can only be specified by the starting compounds (i.e. boric acid and alkanolamine) or, optionally, also by their molar ratio.

Preferably, aminoborates are products of reaction of boric acid with alkanolamine in molar ratio boric acid: alkanolamine of from 1:1 to 6:1, more preferably their molar ratio is in the range of from 2.5:1 to 3.5:1.

The following forms, differing in the degree of dehydration, are considered as boric acid: orthoboric acid, H₃BO₃, metaboric acid, HBO₂, tetraboric acid, H₂B₄O₇ and boron trioxide, B₂O₃, or mixture thereof. Preferably, the boric acid is orthoboric acid. Alkanolamine of the general formula (II) is preferably selected from the group comprising ethanolamine, diethanolamine, triethanolamine, 2-amino-1-propanol, 1-amino-2-propanol, diisopropanolamine and 1-amino-2-butanol. Most preferably, the alkanolamine is ethanolamine.

The subject of the present invention is also a method of protecting plants against frost, i.e., against negative impact of frost, wherein a composition in the form of solution containing at least one compound of the general formula (I) and at least one aminoborate is applied onto above-ground parts of plants such as leaves, blooms, fruits or stems.

The preparation may further contain additional substances, for example solvents, anti-foaming agents, colorants, stabilizers, excipients etc. The preparation may further contain growth regulators, fertilizers, anti-oxidants, fungicides, insecticides, generally substances commonly used in agriculture. Solvents are hydrophilic solvents, such as propylene glycol, ethanol, tetrahydrofurfuryl alcohol. An anti-foaming agent is any substance able to decrease foam stability, preferably a compound based on silicones. Excipients are adhesives, binders and rheological modifiers.

Upon the application of the composition of the invention, plants are protected against frost in the range of temperatures from 0 °C to -10 °C, preferably from 0 °C to -6 °C. It is suitable to perform the application after the forecast of a temperature decrease below freezing point, which means several days to several hours before the frost. The application performed 3 days to 12 hours before the coming frost is considered to be the most effective. In urgent cases, the application can be performed even during the night when it begins to freeze. The composition can be used to preventively protect healthy plants as well as plants already partially damaged by frost. The application can be done several times, as needed.

The preparation is suitable for the use on plants sensitive towards frost, for example for the protection of agricultural crops such as fruit plants (e.g. grapevine, apple, pear, apricot, peach, plum, sour cherry, cherry, walnut, currant, gooseberry, coffee, cocoa tree, almond and citrus, e.g. sweet orange, mandarin, lemon, lime, cumquat, grapefruit, pomelo), field crops (e.g. potato, sugar beet, corn, poppy, sunflower), vegetables (tomato, pepper, cabbage, savoy cabbage, cauliflower, broccoli, kohlrabi, celery root, beet, eggplant, cucumber, pumpkin, lettuce, Napa cabbage, Peking cabbage, water melon, sugar melon), and for use on ornamental plants, which are, with regard to their biology, expected to be negatively affected by frost.

The preparation may be applied with the dosage of the compound of the general formula (I) in the range of from 5 to 500 g/ha, preferably from 10 to 250 g/ha, most preferably from 20 to 100 g/ha. Aminoborates may be applied in the dosage corresponding to the range of from 5 to 500 g of boron/ha, preferably from 20 to 350 g of boron/ha, most preferably from 50 to 200 g of boron/ha.

### Examples

### Example 1

### Preparation of the compositions

Following materials were used to prepare compositions **A** to **C**. The ingredients were mixed thoroughly and dissolved in water.

| **Material** | **Formulation [w/w %]** | | |
|---|---|---|---|
| | **A** | **B** | **C** |
| Cocoamidopropyldimetylbetaine (30 % aqueous solution) | 10.6 | | |
| Oleylamidopropyldimethylbetaine (30 % aqueous solution) | | 10.6 | |
| Laurylamidopropyldimetylbetaine (30 % aqueous solution) | | | 10.6 |
| Aminoborate solution formed by reaction of orthoboric acid with ethanolamine in molar ratio 3.2:1 (15 w/w % of boron) | 72.9 | 72.9 | 72.9 |
| Water | 16.5 | 16.5 | 16.5 |

### Example 2

### Efficiency test on Capsicum annuum

Formulation A according to Example 1 was foliarly applied, 24 hours prior to the experiments, on plants *Capsicum annuum* (cultivar Korál) planted in cultivation containers. The applied formulation had a concentration of 3 ml/l and was in a form of spray. The application was performed with back sprayer until the first drip of the spraying liquid. As a negative control, plants sprayed by water were used. Each variant was performed in triplicates.

The night before the actual experiment, the plants were placed into a dark and cool room. Next morning, the exposed variants were transferred into a cryobox with a pre-set temperature of 0 °C. They were maintained in dark.

The temperature decrease was performed during 2 hours with the temperature gradient of 3 °C/h. Once the temperature of -6 °C was reached, a 1 hour exposition took place, followed by gradual warming up with a gradient of 6 °C/h until the temperature of +6 °C was reached. The total exposition time at temperatures below zero was calculated as a sum of the time of temperature decrease (2 hours), exposition time at the set temperature (1 hour) and the time of temperature increase (1 hour), four hours in total. After their withdrawal, plants were placed back to the cool room to minimalize their temperature shock. This time the cool room was already illuminated and the plants were left there for ca. 3 hours. Thereafter they were already exposed to normal conditions of the exterior. The plant appearance evaluation was performed immediately afterwards and then in regular intervals during the following 10 days.

All control plants showed typical frost damage manifestations (browning, loss of turgor pressure - wilting, necrosis) and died till the next day. Plants treated with formulation **A** did not manifest any signs of damage, and grew normally until the end of the experiment (10 days after the exposition to the frost).

### Example 3

### Efficiency test on tomatoes

An analogous experiment as in Example 2 was performed with pole tomato (cultivar Tipo F1). The only difference was the temperature gradient of 2 °C/h during the temperature decrease. After two hours, the temperature of -4 °C was reached and the exposition lasted 1 hour. The following temperature increase was performed with temperature gradient of 4 °C/h until the temperature of +6 °C was reached. The total exposition time to temperatures below zero was therefore the sum of the time of temperature decrease (2 hours), exposition time at the set temperature (1 hour) and the time of temperature increase (1 hour), four hours in total.

All control plants showed typical frost damage manifestations (browning, loss of turgor pressure - wilting, necrosis) and died till the next day. Plants treated with formulation **A** did not manifest any signs of damage, and grew normally until the end of the experiment (10 days after the exposition to the frost).

### Example 4

### Phytotoxicity of the composition

Formulation A was applied on the plants of *Capsicum annuum* and pole tomato in the same manner as in Example 2, however, the plants were not exposed to frost. The state of health of the plants was examined. There was no phytotoxic effect observed during 10 days following the application.

The phytotoxicity during repeated applications was also monitored. Upon applications repeated twice and three times within 24 hours (always in the same dosage as in Example 1), there were no phytotoxic signs observed on the plants.

Another group of plants underwent an analogous experiment as the one described above (using repeated applications) but, additionally, the plants were exposed to frost (under the conditions of Experiments 2 and 3). The protection against frost was as much successful as in Examples 2 and 3, and even after 3 subsequent applications of the formulation **A** there were no phytotoxic signs observed.

### Example 5

### Efficiency test on grapevine in field conditions

One hectare of vineyards in Znojmo wine-growing region was treated with formulation **A** according to Example 1. The treatment took place 12 hours prior to freeze arrival. The formulation was applied in a form of a foliar spray. The application dose was 1500 ml/ha of the formulation **A** and the amount of the spraying liquid was 600 l/ha. Plants sprayed with water were used as negative control. The temperature descended to -3 °C during the night.

Control plants showed frost damage already 48 hours later: the whole developed leaf surface was destroyed. Later on, these control plants sprouted again from side buds, which caused a significant slowdown of plant growth and development.

The plants treated with formulation **A** showed only a slight leaf damage caused by frost, and this damage was completely regenerated during the vegetation period.

The yield difference between the control sample and the treated sample was 41 % in favour of the treated plants. The treated plants also had a higher sugar content, caused by the time shift of the vegetation period. The sugar content difference was 7 % (21.7 °NM for the control plants and 23.2 °NM for the treated plants; 1 °NM stands for 1 kg of sugar per 1001 of must).

### Example 6

### Efficiency test in apple orchard

An apple orchard of 0.32 ha was treated with formulation **A** according to Example 1 at 4 pm prior to freezing night. The formulation was applied as a foliar spray in an application dosage of 1500 ml/ha and the spraying liquid amount was 800 l/ha. Trees sprayed with water were used as negative control. The temperature descended to -3 °C during the night.

The control trees showed frost damage, a partial fruit fall off, and a damage of young leaves. By contrast, no frost damages were observed on the trees treated with formulation **A**. The yield difference between control and treated trees was 27 % in favour of the treated plants.

## Claims

1. A composition for plant protection against frost, **characterized in that** it contains at least one substance of the general formula (I), 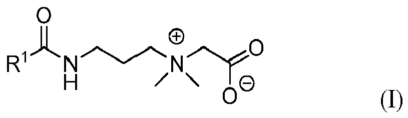 wherein R¹ is C₈-C₂₀ alkyl or C₈-C₂₀ alkenyl, and
at least one aminoborate obtainable by reaction of boric acid with alkanolamine of the general formula (II)
HO-R²-NR³R⁴ (II)
wherein R² is a saturated C₂-C₄ hydrocarbon chain, optionally substituted with hydroxy or amino group at any carbon atom with the exception of geminal substitution, and
R³ and R⁴ are independently hydrogen or -R²-OH.

2. The composition according to claim 1, **characterized in that** R¹ is derived from natural lipophilic carboxylic acids present in precursors, selected from the group containing coconut oil, hydrogenated coconut oil, tallow, hydrogenated tallow, palm oil.

3. The composition according to claim 1, **characterized in that** R¹ is derived from a carboxylic acid selected from the group containing caprylic acid, capric acid, lauric acid, myristic acid, palmitic acid, stearic acid, palmitoleic acid and oleic acid.

4. The composition according to claim 1, **characterized in that** the compound of the general formula (I) is selected from the group containing cocoamidopropyldimetylbetaine, oleylamidopropyldimethylbetaine, laurylamidopropyldimetylbetaine.

5. The composition according to claim 1, **characterized in that** aminoborates are products of reaction of boric acid with alkanolamine in molar ratio boric acid:alkanolamine of from 1:1 to 6:1, preferably in molar ratio in the range of from 2.5:1 to 3.5:1.

6. The composition according to claim 1 or 5, **characterized in that** alkanolamine of the general formula (II) is selected from the group comprising ethanolamine, diethanolamine, triethanolamine, 2-amino-1-propanol, 1-amino-2-propanol, diisopropanolamine and 1-amino-2-butanol.

7. A method of plant protection against frost, **characterized in that** above-ground parts of plants are treated with a composition containing at least one compound of the general formula (I) and at least one aminoborate in the form of a solution, the compound of the general formula and aminoborates being as described in claim 1.

8. The method according to claim 7, **characterized in that** the treatment is performed once or repeatedly, 3 days to 12 hours prior to the frost period.

9. The method according to claim 7 or 8, **characterized in that** the composition is applied with the dosage of the compound of the general formula (I) in the range of from 5 to 500 g/ha, and the dosage of the aminoborate in the range of from 5 to 500 g of boron/ha.
